# EUROPEAN PATENT SPECIFICATION

(11) **EP 0 517 799 B1**
(45) Date of publication and mention of the grant of the patent: **21.01.1998**
(21) Application number: 91905612.7
(22) Date of filing: 25.02.1991
(51) Int. Cl.: F21S 1/02, H02G 3/08

(54) **CORNER MOUNTED LIGHTING FIXTURE AND WIRING DEVICES**
ECKLEUCHTE UND VERKABELUNG
APPAREIL D'ECLAIRAGE LUMINAIRE DE COIN ET DISPOSITIFS DE POSE DES FILS

(30) Priority: 26.02.1990 US 484822
(43) Date of publication of application: 16.12.1992
(73) Proprietor: RUSSELL, James, P., Caldwell, New Jersey 07006 (US)
(72) Inventor: RUSSELL, James, P., Caldwell, New Jersey 07006 (US)
(74) Representative: Füchsle, Klaus, Dipl.-Ing.
(86) International application number: PCT/US91/01250
(87) International publication number: WO 91/13287

(56) References cited:
- FR-A- 2 642 605
- GB-A- 1 043 936
- US-A- 2 254 847
- US-A- 2 694 137
- US-A- 4 111 390
- US-A- 4 217 629
- US-A- 4 352 151
- US-A- 4 534 147
- US-A- 4 590 544
- US-A- 4 862 333
- US-A- 4 894 758

## Description

The present invention relates to a corner lighting fixture for permanent installation in a corner between two intersecting walls, to electrical junction boxes for that purpose, and to a mounting system for electrical wiring devices.

US-A-4 246 629 describes a lighting fixture for permanent installation in a corner of a room between two intersecting walls. It comprises in combination a housing with rear walls shaped to fit snugly in said corner while positioning the housing symmetrically about the corner bisecting plane, brackets for enabling said housing to be fastened symmetrically about said bisecting plane to said intersecting walls in said corner, and apertures in said housing for admitting electric branch circuit wiring. Sockets for receiving fluorescent tube are mounted on said housing with wiring passing therethrough into said housing for electrical connection to said branch circuit wiring. End walls of said housing are separable and removable from said housing to permit access to the interior of said housing.

US-A-2 254 847 describes a backboard for supporting a telephone substation in a corner of a telephone booth. It is entirely unsuitable for use in mounting electrical fixtures in a corner of a room constructed of stud partitioning.

US-A-4 534 147 describes a duct molding for mounting cables along a wall or ceiling. The ducting is of open-ended construction and does not provide internal cable terminations, so that it is not intended or suitable for mounting light fittings.

In my United States patent No. 4,217,629, issued August 12, 1980 for a "Corner Lighting Assembly", a portable lamp assembly is described having particular utility providing illumination for fostering plant growth. An object of that invention was to provide a corner lightweight portable lamp assembly that was easily mounted, fit snugly in the corner of a room regardless of irregularities in the adjacent wall surface or corner, was adapted to blend unobtrusively into its surroundings, and provided optimal control And projection of plant growth fostering illumination. To provide mounting flexibility, exposed wiring was employed and concealed behind decorative trim strips.

There are occasions, however, when it is desirable to permanently install lighting fixtures similar in overall outward configuration to those described in my said earlier patent. While numerous patents have been issued for corner lighting fixtures, the patents that have come to my attention, namely 1,900,436; 2,428,827; 2,800,577; 4,246,629; 4,338,653 and 4,352,151, all concentrate on the luminaire and avoid any illustration of the electrical junction box with which the fixture is to be connected. In each instance one must assume that a junction box would be located recessed in the wall with an opening facing into the room and that the fixture would have some means of fastening it either to the junction box or to the surrounding building structure. This often results in a redundancy of structure in that the lighting fixture is usually provided with a chase or wire way where electrical connections are made, and additional connections are made in the built in junction box.

There are also occasions when it is desirable to provide electrical wiring devices in a room corner. Such devices might contain jacks for telephones, TV cable jacks, electric convenience outlets, and the like. Heretofore, conventional practice and hardware limited installation to side walls spaced from a room corner and often necessitating the use of either fixed or loose surface wiring to reach a corner.

With the foregoing in mind, it is an object of the present invention to provide an arrangement for permanently installing shade-like lamp housings of the general type described in my prior patent.

A further object is to provide for such installation in a manner not requiring a conventional recessed junction box.

A still further object is to provide a lighting fixture having a surface mounted junction box, and a plurality of interchangeable shade-like lamp housings for use therewith.

Yet another object is to provide means for mounting electrical wiring devices in.a corner of a room catercorner thereto.

A further object is to provide modified junction boxes and the like designed to fit snugly in room corners in an aesthetic and functional manner, and to provide mounting or adapter means for such boxes, and for other wiring devices.

In accordance with one aspect of the invention, there is provided a lighting fixture for permanent installation in a corner between two intersecting walls comprising in combination a junction box with rear walls shaped to fit snugly in said corner, means for enabling said junction box to be fastened to said intersecting walls in said corner, entry means on said junction box for admitting electric branch circuit wiring and securing such wiring against separating from said junction box, a screw socket for receiving a bulb, said socket being mounted on another wall of said junction box with wiring passing therethrough into said box for electrical connection to said branch circuit wiring, at least one wall of said junction box other than said rear walls thereof being separable and removable from said junction box to permit access to the interior of said junction box, all of said removable junction box walls being joined to the rear walls of a shade-like lamp housing constructed and arranged with a rear opening for receiving said junction box therethrough, all of said removable junction box walls being located for assembly to said junction box when said lamp housing is positioned over said junction box, means for fastening said removable junction box walls to said junction box for closing said junction box while simultaneously mounting said lamp housing.

In accordance with another aspect of the invention there is provided an electrical junction box system installed in a corner of a room between two intersecting walls supported by room corner studs said junction box having rear walls including orthogonally related portions shaped to fit snugly in said corner while positioning the junction box symmetrically about the corner bisecting plane, means including apertures in said orthogonally related portions for enabling said junction box to be fastened symmetrically about said bisecting plane to said intersecting walls in said corner with said apertures overlying the room corner studs, fasteners passing through said apertures into said walls, and room corner studs and entry means on said junction box for admitting electric wiring and securing such wiring against separating from said junction box, said junction box having side walls that terminate in straight edges bounding an opening to the junction box and lying in a common plane which plane is located catercorner to said intersecting walls of the room and means for securing to said straight edges means for closing said junction box.

In accordance with yet another aspect of the invention there is provided a mounting system for mounting an electrical wiring device the system being installed in a corner of a room between two intersecting walls supported by room corner studs and comprising a mounting adapter having a cross-section configured and dimensioned to fit in said room corner between said corner and said device and having a surface positioned catercorner to said intersecting walls to which a rear wall of said device is securely fastened to position said device symmetrically about said bisecting plane catercorner to said intersecting walls, said adapter having means receiving fasteners in one or more locations in sufficient proximity to the room corner to secure the adapter to said room corner studs.

### BRIEF DESCRIPTION OF THE DRAWINGS

The invention will be better understood after reading the following detailed description of the presently preferred embodiments thereof with reference to the appended drawings in which:
Figure 1, is a front perspective view of an exemplary corner lighting fixture embodying the present invention and shown mounted in a corner of a room;
Figure 2, is a view similar to Fig. 1, but with the front decorative panels of the fixture broken away to show the interior construction of a first embodiment of the invention;
Figure 3, is a front elevational view of the junction box constituting a component part of the fixture of Figs. 1 and 2;
Figure 4, is a bottom view of the junction box of Fig. 3;
Figure 5, is a side elevational view of the junction box of Fig. 3;
Figure 6, is a top view of the same junction box;
Figure 7, is a perspective view of the rear panel of the light fixture of Figs. 1 and 2, before assembly of the front decorative panel and separated from the junction box, for the purpose of more clearly illustrating its construction;
Figure 8, is a top view of the structure of Fig. 7;
Figure 9, is a front elevational view of the structure of Fig. 7;
Figure 10, is a rear elevational view of the structure of Fig. 7;
Figure 11; is a top view of the junction box of Figs. 3 to 6, showing it in the process of being installed in a room corner after attaching a branch circuit conduit thereto;
Figure 12, is a front elevational view of a fixture similar to that shown in Fig. 1, but with the front decorative panels removed to reveal the front of the junction box and the lamp socket of another embodiment of the invention;
Figure 13, is an exploded perspective view of the junction box and rear panel of the fixture as seen in the assembly of Fig. 12;
Figure 14, is a vertical sectional view taken along the line 14-14 in Fig. 12;
Figures 15, 16 and 17, are, respectively, rear elevational, top plan and bottom plan views of the rear panel of the fixture shown in Fig. 13;
Figure 18, is a front elevational view of the junction box minus its cover as seen in Fig. 13;
Figure 19, is a top plan view of the junction box in Fig. 18;
Figure 20, is a transverse sectional view taken along the line 20-20 in Fig. 18;
Figure 21, is an exploded perspective view showing a modification of the junction box of Fig. 18, and one embodiment of an adapter for mounting the junction box;
Figure 22, is a view similar to Fig. 21, but with the box and adapter joined to the studs in the corner of a room, and a cover plate in exploded relation thereto;
Figure 23, is a transverse sectional view taken along the line 23-23 in Fig. 22, and showing the connection to the junction box of an electric cable;
Figure 24, is a view similar to Fig. 21 showing a duplex or double compartment junction box as a modification of the box of Fig. 21;
Figure 25, is a perspective view of an octagonal box that can be mounted using the system shown in Figs. 21 to 24;
Figure 26, is a top plan view of the box of Fig. 25;
Figure 27, is a view similar to Fig. 21 but showing a modifted mounting adapter and the corresponding modified junction box;
Figure 28, is a vertical sectional view taken along the line 28-28-through the components of Fig. 27, with the components in assembled relationship fastened in the room corner;
Figure 29, is a view similar to Fig. 27, -showing a modification of the junction box relating to the means for fastening the junction box to the adapter; and
Figure 30, is a vertical sectional view taken along the line 30-30 through the components of Fig. 29, with the components in assembled relationship fastened in the room corner.

The same reference numerals are used throughout the drawings to designate the same or similar parts.

### DETAILED DESCRIPTION OF THE PRESENTLY PREFERRED EMBODIMENTS

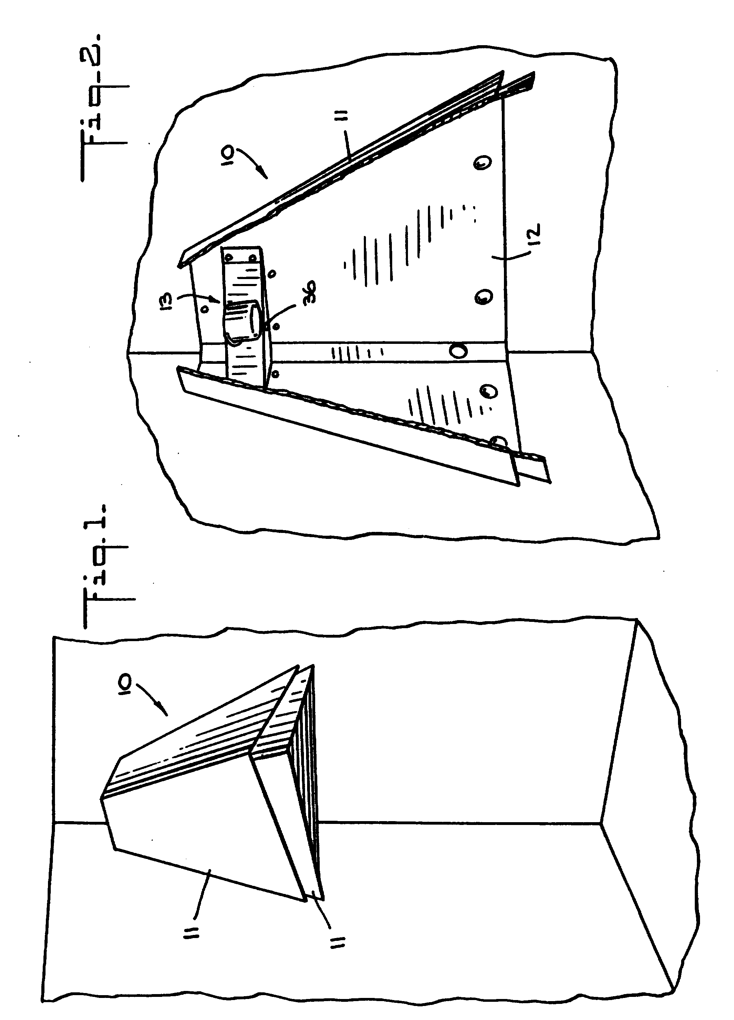

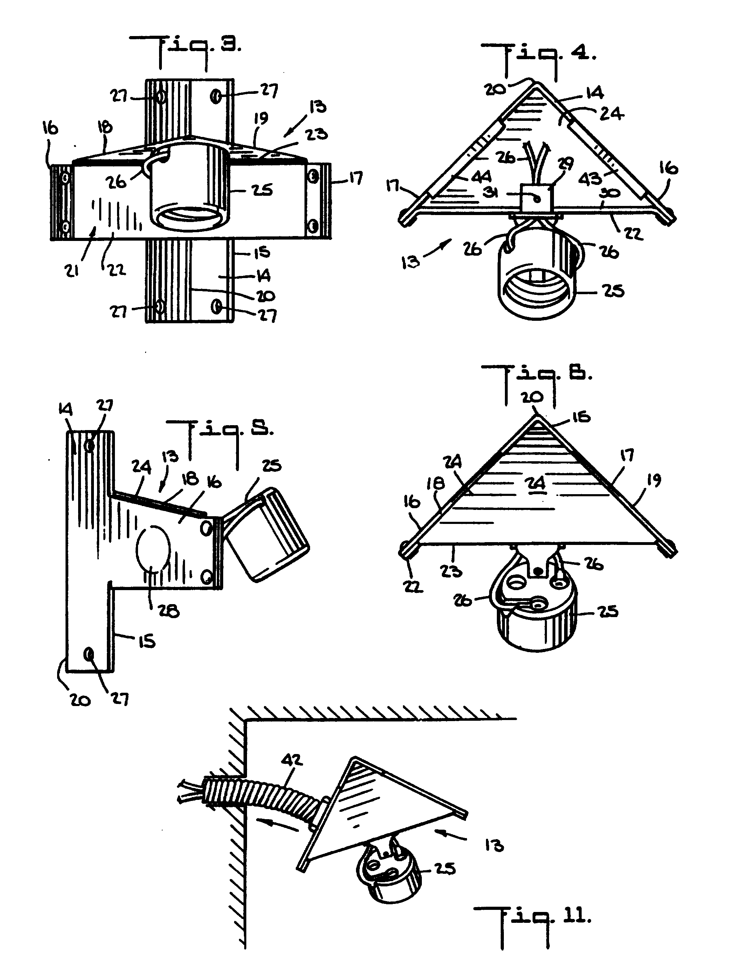

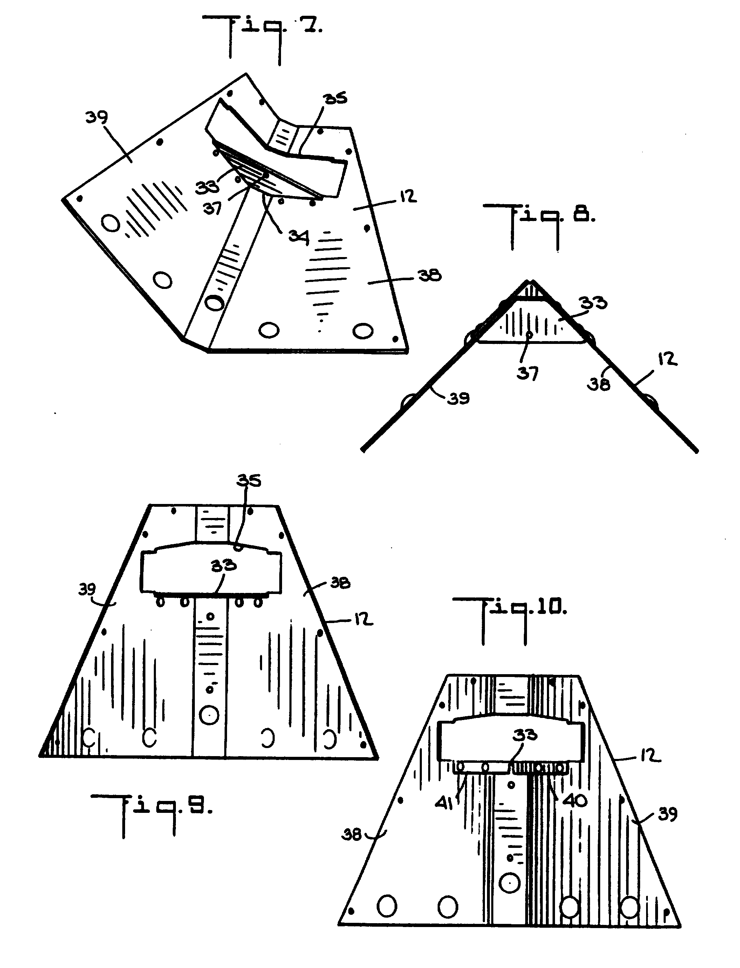

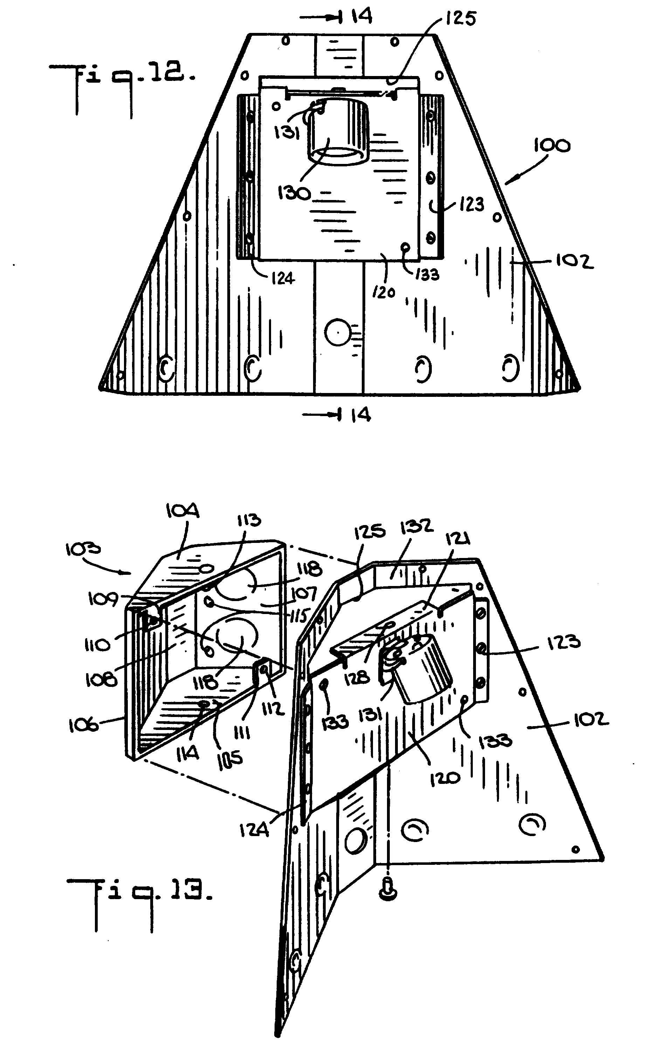

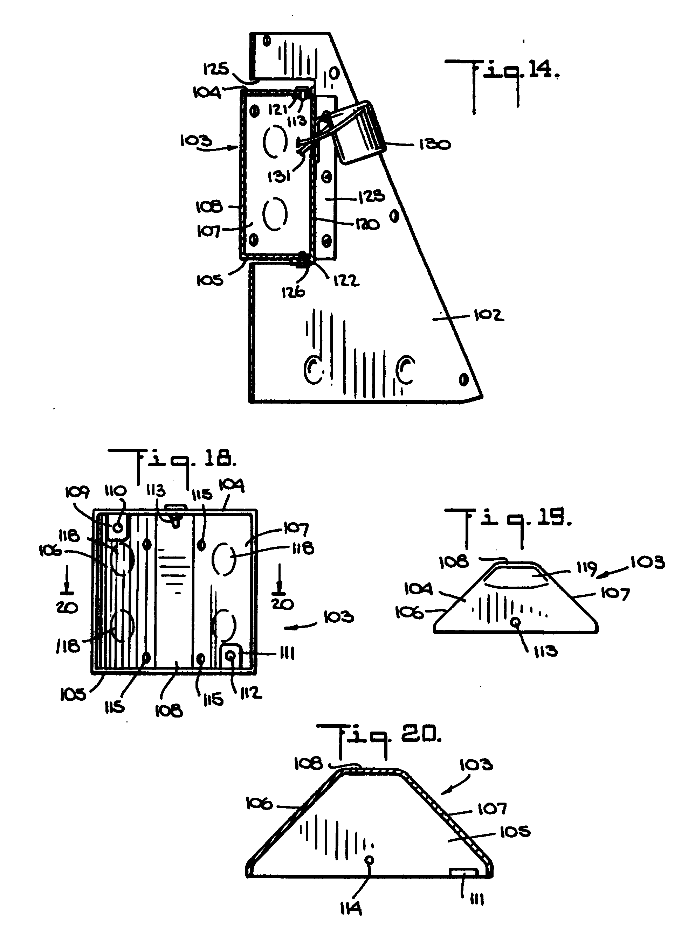

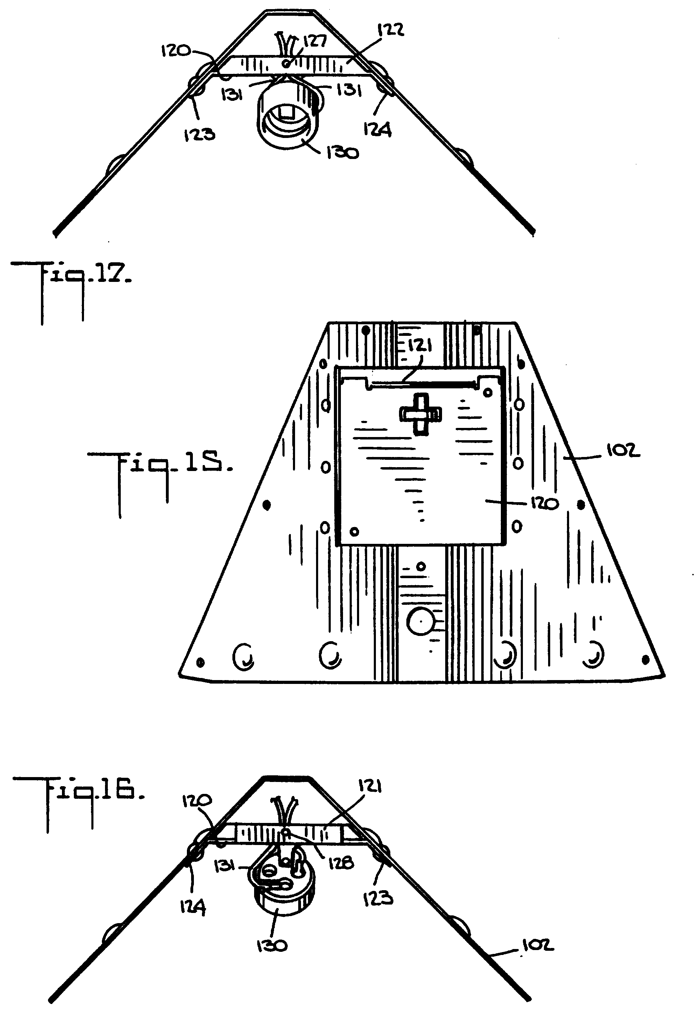

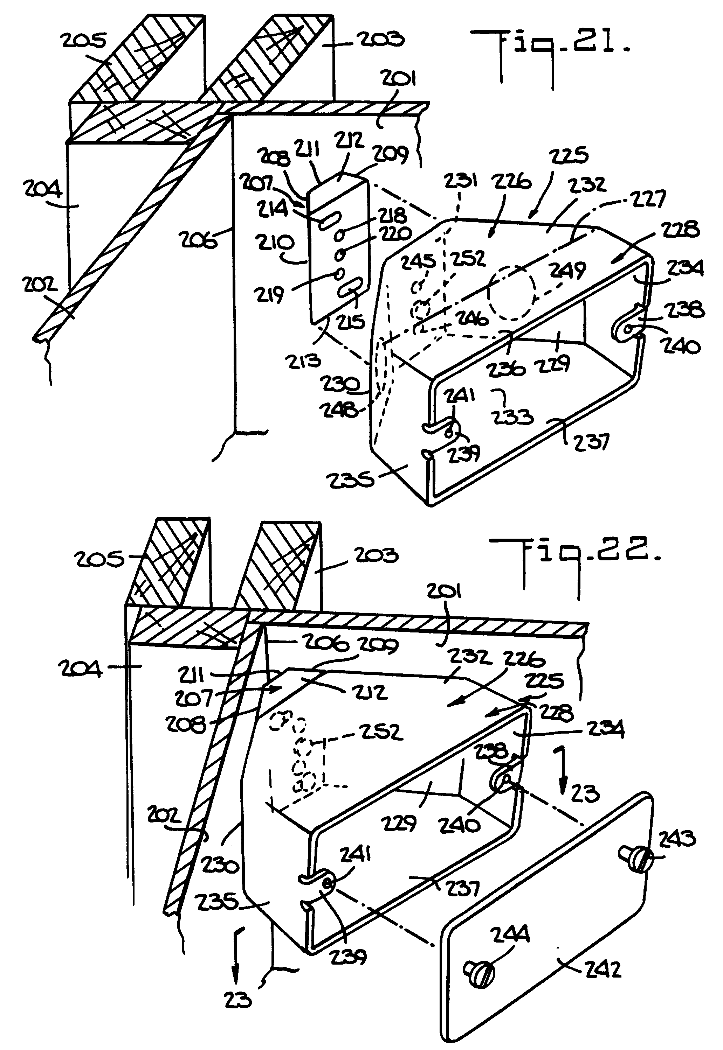

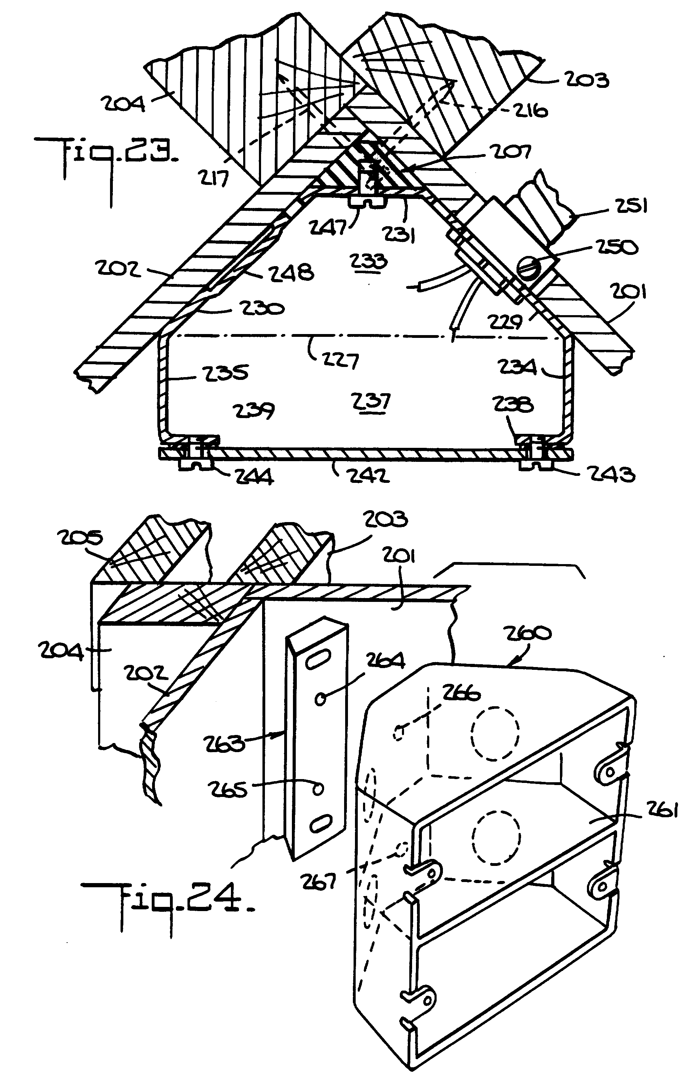

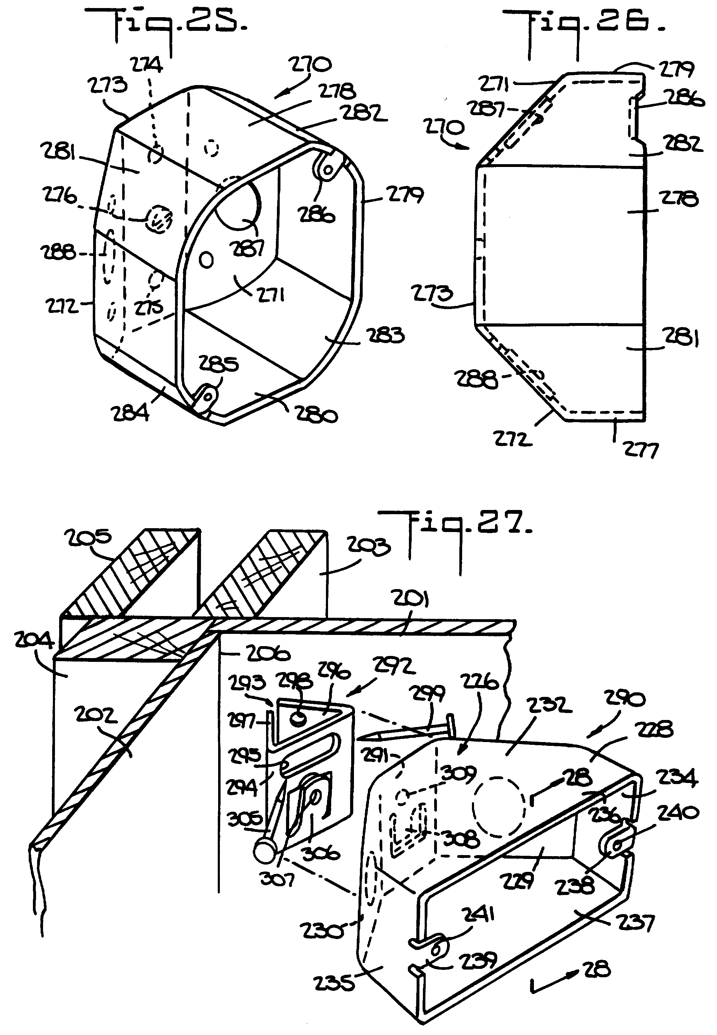

Referring to the drawings, and initially to Figs. 1 to 11, the shade-like lamp housing is designated generally by the numeral 10 and consists essentially of a decorative front panel or panels 11 and a rear panel 12. The front panel 11 can be joined to the side edges of the rear panel either by spot welding or riveting or in any other suitable manner. However, the present invention is directed primarily to the construction of the rear panel 12, the junction box and the relationship therebetween. Before further discussing the panel 12 of the fixture, it will be more convenient to consider the junction box 13 shown in detail in Figs. 3 to 6.

The junction box 13 is formed from a first panel 14 which if laid flat would resemble a tailless airplane. The panel 14 has a rectangular body 15 and wings 16 and 17 extending to each side of the body 15, the leading edges, 18 and 19, respectively, of the wings 16 and 17, being swept back slightly and the entire panel 14 being folded at right angles along a line 20 bisecting the body 15 in the longitudinal direction. A second panel 21 having a rectangular section 22 joined along its long edge 23 by a fold line to a triangular section 24, is joined to the first panel 14 with the rectangular section 22 joining the outstretched ends of the wings 16 and 17. Here the connection is shown accomplished by riveting, but spot welding could be employed. The triangular section 24 is seen to provide a top wall closure for the resulting truncated right triangular prism.

A screw socket 25 for a bulb is mounted on the rectangular section 22 and extends in front of the junction box 13 angled downwardly as best seen in Fig. 5. The socket 25 is provided with the usual connecting wires 26 that pass through an opening in the section 22 into the interior of junction box 13.

As seen in Figs. 3 and 5, the body section 15 is provided with a plurality of apertures 27 through which nails or screws can be passed for mounting the box 13 to the walls in a corner. The sides or wings 16 and 17 of the box 13 are provided with one or more knockouts, such as 28 shown in Fig. 5, for receiving a cable or conduit connector in the usual manner.

From Fig. 4 it will be seen that the box 13 is open at the bottom. A tab 29 extends from the lower edge 30 of the rectangular section 22 rearwardly, said tab being provided with a screw threaded aperture 31 for receiving a threaded fastener, shown at 36 in Fig. 2.

For the purpose of completing the junction box there is provided a triangular bottom wall panel 33 that is permanently joined to the rear walls of panel 12 along the lower edge 34 of a cut-out 35. The cut-out 35 is configured to receive the junction box 13 as best seen in Fig. 2, whereupon the screw fastener 36 can be installed through an aperture 37 (see Fig. 7) in triangular panel 33 into the threaded aperture 31 in tab 29. This simultaneously closes the junction box and secures the lamp housing in position against the walls in the corner.

As seen in Figs. 7 to 10, the rear fixture panel 12 has two truncated triangular side sections 38 and 39, orthogonally related and joined at the rear by a narrow web that provides a slight amount of clearance for general irregularities in the contour of the corner space in which the fixture is to be mounted.

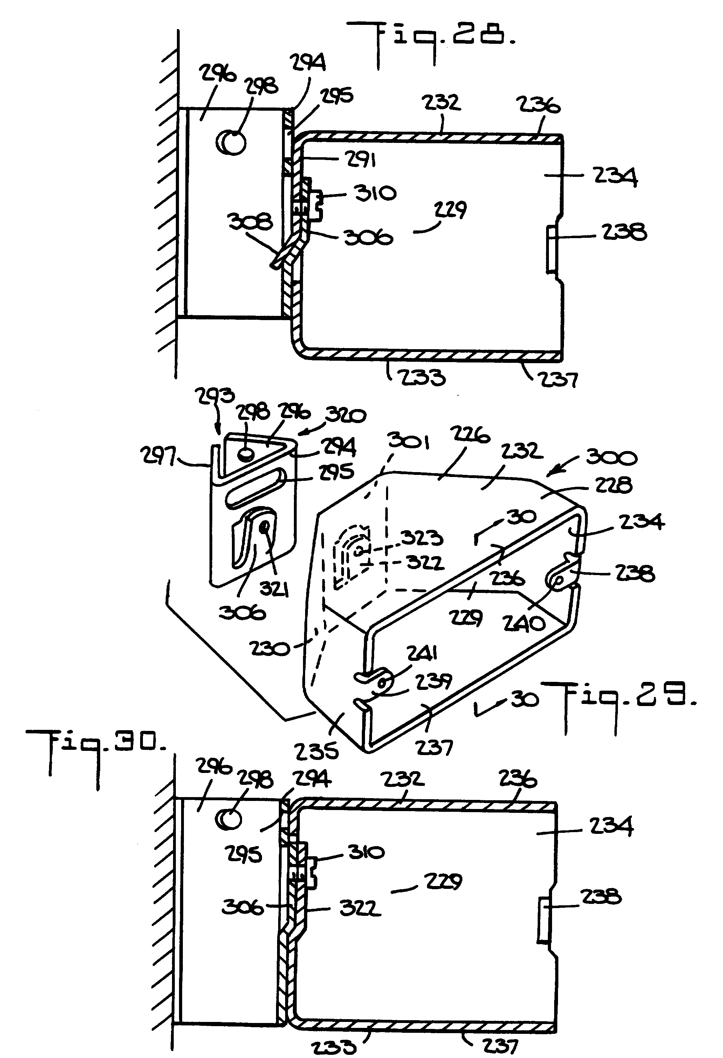

The triangular box panel 33 may be provided with flange extensions 40 and 41, best seen in Fig. 10, whereby the panel 33 is secured by rivets or spot welding to the panel 12. With this construction, one configuration of junction box can be used with a variety of lamp housings in which the front panels 11 change from model to model.

Installation is extremely simple. The branch cable is brought out of the wall in the corner of a room or space at the desired height. A junction box 13 is then connected to the cable 42 in any known manner and then located in the corner as shown schematically in Fig. 11. A few nails through the apertures 27 will secure the junction box in place. Appropriate wire connections to the lamp socket 25 will either already have been made or can be made within the box 13. It is now simply a matter of putting the lamp housing in place and installing the screw 36.

Referring to Fig. 4, the lower edge of wings 16 and 17 may be rolled over at 43 and 44 to provide added strength to wings 16 and 17 and provide a suitable seat for the cover panel 33.

Now turning to Figs. 12 to 20, there is shown another embodiment of the present invention. As seen therein, the shade-like lamp housing is designated generally by the numeral 100 and consists essentially of a decorative front panel or panels similar to those shown in Fig. 1 but not shown herein, and a rear panel 102. As with the embodiment of Fig. 1, the front panel or panels can be joined to the side edges of the rear panel either by spot welding or riveting or in any other suitable manner.

The junction box for this embodiment is shown in detail in Figs. 13, 18, 19 and 20, and is designated generally by the reference numeral 103. It is formed in the shape of an isosceles trapezoidal prism having top and bottom walls, 104 and 105, respectively, side walls 106 and 107, related orthogonally and joined at the rear by a back wall 108.

From the drawings it will be seen that the box 103 is open at the front. The top panel 104 has a downwardly depending tab 109 provided with a threaded aperture 110 while the bottom wall 105 has an upwardly extending tab 111 with a threaded aperture 112. Also, the top wall 104 has a stud or pin 113 secured therein toward the open edge of the wall 104 and projecting into thai interior of the box. The lower wall 105 is provided with a threaded aperture 114. Also, as seen in Figs. 13 and 18, the box 103 is provided with a plurality of apertures 115 through which nails or screws can be passed for mounting the box 103 to the room walls in a corner. The sides 106 and 107 of the box 103 are provided with one or more knockouts, such as that shown at 118 in Fig. 18, for receiving a cable or conduit connector in the usual manner. If desired, the top and bottom walls can be provided with a polygonal knockout such as that shown at 119 in Fig. 19. This knockout is of the type to accommodate surface mounting conduit, if desired.

The junction box 103 as described to this point is an open box requiring a cover. The cover is in the form of a substantially rectangular shaped panel 120 having top and bottom rearwardly directed flanges 121 and 122 and side edge flanges 123 and 124. The flanges 123 and 124 are angled from the panel 120 at a 45° angle and serve to join the wall 120 to the rear wall or panel 102 of the fixture. That is, the front wall 120 of the junction box is permanently joined to the rear walls of panel 102 on either side of a cutout 125. The cutout 125 is configured to receive the junction box 103, as best seen in Fig. 14, whereupon a screw fastener 126 (see Fig. 14) can be installed through an aperture 127 in the flange 122 (see Fig. 17) into the threaded aperture 114 in the bottom wall 105 of the junction box. The pin or stud 113 of the junction box is engaged in an aperture 128 in the upper flange 121. With the front wall 120 thus secured to the main body of the junction box 103 the box is simultaneously closed and the lamp housing is secured in position against the walls of the room in the corner.

A screw socket 130 for a bulb is mounted on the rectangular wall 120 and extends in front of the junction box 103 angled downwardly as best seen in Figs. 13 and 14. The socket 130 is provided with the usual connecting wires 131 that pass through an opening in the wall 120 to the rear thereof for disposition into the interior of junction box 103.

To install the box and fixture shown in Figs. 12 to 20, a branch cable is brought out of the wall in the corner of a room or space at the desired height as with the first embodiment shown in Fig. 11. The junction box 103 is then connected to the cable 42 in any known manner and then located in the corner in the same way as the box 13 in Fig. 11. A few nails through the apertures 115 will secure the junction box in place. Now the lamp fixture can be hung or suspended temporarily from the box 103 by passing the upper section 132 of the rear panel 102 over and behind the tab 111. With the fixture thus suspended, the wires 131 can be connected within the junction box 103 to the incoming wires from cable 42 in the usual manner. Thereupon, the opening 125 in the fixture can be fitted over the junction box 103 with the pin 113 being engaged in aperture 128 and the screw fastener 126 being inserted. Alternatively, or as a supplemental fastening, screws can be passed through the front apertures 133 in the wall 120 into the apertures 110 and 112 in the tabs 109 and 111.

As clearly seen in Fig. 14, the junction box 103 has a height substantially equal to the distance between the flanges 121 and 122 such that the top and bottom walls 104 and 105 of the junction box, when assembled to the removable wall 120, overlie the flanges 121 and 122, as shown.

Reference should now be had to Figs. 21 to 23. For the purpose of illustrating a typical environment encountered in the corner of a room, the drawings show intersecting walls, 201 and 202, secured to corner studs 203, 204 and 205. The stud arrangement is typical in that only a narrow vertical strip of wall immediately adjacent a corner 206 is backed by a stud. The construction of the novel adapter 207 is such as to enable it to be fastened in the corner 206 by nails or screws passing into either the stud 203 or 204.

The adapter 207 is in the form of an isosceles trapezoidal prism having side walls 208 and 209, a wide front wall 210 and a narrow rear wall 211 parallel to the front wall 210, with top and bottom walls 212 and 213. The walls 212 and 213 can be parallel or non-parallel, planar or non-planar to suit the contours of the box or device to be fastened thereto.

As seen from Figs. 21 and 23, the adapter 207 is provided with two through bores, 214 and 215, which enter the front wall 210 at an angle, and pass through to the opposite side wall 209 and 208, respectively. The side walls 208 and 209 are orthogonally related so as to fit snugly against the room walls 202 and 201, respectively, when the adapter is fastened in the room corner 206. This is best seen in Fig. 23. When so fastened, the wall 210 will be positioned catercorner symmetrically about the corner bisecting plane. The bore 214 is preferably parallel to wall 208 and therefore normal to wall 209. Conversely, bore 215 is parallel to wall 209 and normal to wall 208. The adapter is dimensioned relative to the normal stud construction somewhat as shown in Fig. 23 such that nails or screws 216 and 217 will enter either stud 203 or stud 204 to firmly secure the adapter 207 in the corner 206.

Finally, the adapter 207 is provided with two threaded bores 218 and 219 located in wall 210 normal thereto, and with a clearance or locating bore 220.

As shown in Figs. 21-23, a junction box 225 has a rear section 226 behind the phantom line 227 in the form of a right isosceles trapezoidal prism to which is integrally joined a front section 228 in the form of a right rectangular prism. Thus, the section 226 has orthogonally related side walls 229 and 230, a rear wall 231, an imaginary front boundary at the line 227, and top and bottom wall segments 232 and 233. The section 228 has parallel side walls 234 and 235 extending from the side walls 229 and 230, respectively, and top and bottom parallel wall segments 236 and 237. The front of the box 225 is normally open and provided with opposite tabs 238 and 239 which each contain a threaded aperture 240, 241. The front of box 225 both as to rectangular shape and size as well as tab construction can be conventional such as to be closed, as shown in Fig. 22, by a conventional cover plate 242 with the aid of screws 243 and 244.

In order to attach box 225 to adapter 207, the rear wall 231 is provided with two apertures 245 and 246 intended to register with the bores 218 and 219 in adapter 207 when walls 231 and 210 are brought into engagement. It should be apparent that walls 210 and 231 as shown in the drawings are substantially congruent. This is important in the width dimension but may be varied in the vertical dimension. Suitable screws such as 247 seen in Fig. 23, are used to join box 225 to adapter 207.

As shown in Fig. 21, knockouts 248 and 249 are provided in side walls 229 and 230. In Fig. 23, the knockout 249 has been removed and a cable connector 250 of conventional construction installed in the resulting aperture. During assembly, similar to Fig. 11, the cable 251 is first brought out of the wall and connected to box 225. Then the box 225 is set in place, snug in the corner, and fastened to adapter 207, already in place.

The box 225 is preferably provided with a grounding connection in the form of a screw 252 threaded through the back wall 231 midway between the apertures 245 and 246 in line with the latter. Besides functioning as an attachment for the conventional grounding wires, the screw 252 projects beyond the rear wall 231 and functions as a locating pin upon entering the bore 220 in adapter 207.

The junction box 225 is sized with a conventional forward section 228 adapted to receive standard electrical devices such as sockets and the like and standard cover plates.

When a duplex arrangement is desired, a box such as the box 260 in Fig. 24 can be employed. Essentially, the box 260 is equivalent to two boxes 225 stacked one above the other but with a common dividing wall 261. Wall 261 can be omitted if desired. The transverse shape of box 260 is the same as that of box 225. Box 260 is used with an adapter 263 which, it should be apparent, is an elongated version of adapter 207. Threaded bores 264 and 265 in adapter 263 receive screws (not shown) passed through apertures 266 and 267 in the rear wall of box 260. While adapter 263 does not have a bore similar to the bore 220 in adapter 207, a bore can be provided if desired or necessary to accommodate a grounding screw such as the screw 252 in Fig. 21.

Various shape junction boxes or wiring devices can be mounted in a room corner using an adapter such as 207 or 263. An example of an octagonal box is shown in Figs. 25 and 26, where the box is designated generally by the reference numeral 270. As with the boxes 225 and 260, the box 270 has a rear portion or segment which in transverse cross-section has an isosceles trapezoidal shape to which is joined a front segment of rectangular shape. As seen in top plan view in Fig. 26, the box 270 has rear side walls 271 and 272 that are orthogonally related. These are the non-parallel walls of the trapezoidal segment. The small wall of the trapezoidal segment is the rear wall 272 provided with apertures 274 and 275 as well as grounding screw 276, corresponding, respectively, to the elements 245, 246 and 252 of Fig. 21. For both functional and aesthetic reasons the walls 277, 278, 279 and 280 are planar and alternate with curved walls 281, 282, 283 and 284. Tabs 285 and 286 are provided at standard spacing such that standard cover plates and other electrical devices can be mounted thereon. Knockouts 287 and 288 are provided for bringing in cable or conduit connections.

The embodiments shown in Figs. 21 to 26 all make use of an adapter in the form of an isosceles trapezoidal prism. However, it may be preferable to fabricate the adapter from metal sheet stock, examples of which are shown in Figs. 27 to 30 to which attention should now be directed. For convenience, only one size and shape junction box is illustrated in these figures. The box is designated generally by the reference numeral 290 in Fig. 27 and 300 in Fig. 29. They differ from the box 225 in Fig. 21 solely in the construction of the rear wall 291 in Fig. 27 and 301 in Fig. 29. Therefore, the description of the remainder of the boxes will not be repeated.

Referring now to Fig. 27, the mounting system shown therein employs an adapter designated generally by the reference numeral 292 which is formed from a strip of metal sheet stock into a generally right triangular configuration but with the right angled corner at 293 missing such that the perimeter of the adapter 292 has the shape of an isosceles trapezoid with the smaller parallel side missing. The widest parallel side or base 294 of the triangle has a horizontally disposed slot 295 when the adapter 292 is placed in a vertical corner of a room. Each of the non-parallel sides 296 and 297 of the adapter 292 have a respective aperture, such as the aperture 298 in side 296. The side 297 is a mirror image of the side 296 and has a similar aperture although not seen in the drawing. The aperture 298 in side 296 as well as the aperture in side 297 are located on a level with and accessible through the slot 295 for driving a fastener through the respective aperture into a corner wall stud. For example, the nails 299 and 305. The widest parallel side, that is the side 294 of the adapter is provided with means for enabling a junction box or other wiring device to be fastened contiguous thereto. As illustrated in Fig. 27, the side 294 has a tab 306 struck therefrom as shown and provided with an aperture 307.

The rear panel 291 of the junction box 290 is provided with a complemental tab 308 which overlaps the tab 306 in the bracket when the junction box 290 is assembled thereto as best seen in Fig. 28. When so assembled a threaded aperture 309 in the wall 291 comes into registration with the aperture 307 in the tab 306 of the adapter 292 to enable a fastener such as a suitable screw 310 to be inserted through aperture 307 in tab 306 into the threaded aperture 309 in the box wall 291 which upon assembly is behind tab 306, all as shown in Fig. 28.

A reverse construction is illustrated in the embodiment of Figs. 29 and 30. As shown therein the adapter 320, essentially identical to the adapter 292 but differing therefrom in that the aperture 321 in tab 306 is now tapped rather than a mere through opening. The rear wall 301 of the junction box 300 has a tab 322 struck therefrom in a manner opposite to that found in the box 290 of Fig. 27. That is, as seen in Fig. 27 the tab 308 is disposed downwardly whereas in the embodiment of Fig. 29 the tab 322 extends upwardly and is provided with an unthreaded aperture 323. When the box is assembled to the adapter as shown in Fig. 30 a screw 310 passes through the aperture 323 in tab 322 and threads into the aperture 321 in tab 306 to fasten the box to the adapter.

Having described the invention with reference to the presently preferred embodiments thereof, it will be apparent to three skilled in the subject art that numerous changes in construction and detail can be introduced without departing from the invention as defined in the appended claims.

## Claims

1. A lighting fixture for permanent installation in a corner of a room between two intersecting walls comprising in combination a junction box (13) with rear walls shaped to fit snugly in said corner while positioning the junction box symmetrically about the corner bisecting plane, means for enabling said junction box to be fastened symmetrically about said bisecting plane to said intersecting walls in said corner, entry means (20) on said junction box for admitting electric branch circuit wiring (26) and securing such wiring against separating from said junction box, a screw socket (25) for receiving a bulb, said socket being mounted on another wall (23) of said junction box (13) with wiring passing therethrough into said box for electrical connection to said branch circuit wiring, at least one wall of said junction box (13) other than said rear walls thereof being separable and removable from said junction box to permit access to the interior of said junction box, all of said removable junction box walls being joined to the rear walls of a shade-like lamp housing (10) constructed and arranged with a rear opening (35) for receiving said junction box (13) therethrough, all of said removable junction box walls being located for assembly to said junction box when said lamp housing (10) is positioned over said junction box, and means being provided for fastening said removable junction box walls to said junction box (13) for closing said junction box while simultaneously mounting said lamp housing (10).

2. A lighting fixture according to claim 1,
wherein said junction box (13) is in the form of a truncated triangular prism.

3. A lighting fixture according to claim 2,
wherein all of said removable junction box walls (24, 33) are triangular shaped.

4. A lighting fixture according to claim 3,
wherein said lamp housing (10) has rear walls (12) that extend forward diverging from a rearward position at an angle of 90° until they merge into a decorative front panel (11).

5. A lighting fixture according to claim 3,
wherein said at least one removable junction box wall is the bottom wall (33) of the junction box.

6. A lighting fixture according to claim 1,
wherein said junction box comprises a first panel (14) resembling an airplane with a rectangular body (15) and wings (16, 17) extending to each side of the body, the leading edges (18, 19) of the wings being swept back slightly and the entire panel being folded at right angles along a line (20) bisecting the body in the longitudinal direction, and a second panel (21) having a rectangular section (22) joined along its long edge (23) by a fold line to a triangular section (24), said second panel (21) being joined to said first panel (14) with said rectangular section joining the outstretched ends of said wings, and said triangular section (24) providing a top wall closure for the resulting truncated triangular prism.

7. A lighting fixture according to claim 6,
wherein said screw socket (25) is mounted on said rectangular section (22) to extend in front thereof.

8. A lighting fixture according to claim 6,
wherein a tab (29) extends from the lower edge of said rectangular section rearwardly, said tab being provided with a screw threaded aperture (31) for receiving a threaded fastener, and said means for fastening said removable junction box wall comprises a threaded fastener arranged to pass through said removable wall and threadedly engage said tab aperture (31).

9. A lighting fixture according to claim 1,
wherein said junction box is in the form of an isosceles trapezoidal prism.

10. A lighting fixture according to claim 9,
wherein said at least one removable junction box wall is substantially rectangular shaped.

11. A lighting fixture according to claim 10,
wherein said lamp housing has rear walls that extend forward diverging from a rearward position at an angle of 90° until they merge into a decorative front panel.

12. A lighting fixture according to claim 10,
wherein said at least one removable junction box wall is the front wall of the junction box.

13. A lighting fixture according to claim 12,
wherein said screw socket is mounted on said at least one removable junction box wall to extend in front thereof.

14. A lighting fixture according to claim 13,
wherein said at least one removable junction box wall has a rearwardly extending flange (121, 122) along top and bottom edges, an aperture through both said flanges, and said junction box has top and bottom walls (104, 105) and a height substantially equal to the distance between said flanges such that said top and bottom walls of said junction box, when assembled to said at least one removable wall, overlie said flanges, and separate means for passing through said respective apertures in said flanges and engaging, respectively, said top and bottom walls to secure said removable wall to said junction box.

15. An electrical junction box system installed in a corner of a room between two intersecting walls supported by room corner studs (203, 204), said junction box (103) having rear walls (106, 107, 108) including orthogonally related portions (106, 107) shaped to fit snugly in said corner while positioning the junction box (103) symmetrically about the corner bisecting plane, means including apertures (115) in said orthogonally related portions (106, 107) for enabling said junction box (103) to be fastened symmetrically about said bisecting plane to said intersecting walls in said corner with said apertures overlying the room corner studs (203, 204), fasteners passing through said apertures into said walls and into said room corner studs (203, 204), and entry means (118) on said junction box (103) for admitting electric wiring and securing such wiring against separating from said junction box, said junction box (103) having side walls (104, 105, 106, 107) that terminate in straight edges bounding an opening to the junction box and lying in a common plane which plane is located catercorner to said intersecting walls of the room and means (109, 111) for securing to said straight edges means (120) for closing said junction box (103).

16. A mounting system for mounting an electrical wiring device (226) the system being installed in a corner of a room between two intersecting walls supported by room corner studs (203, 204) and comprising a mounting adapter (207) having a cross-section configured and dimensioned to fit in said room corner between said corner and said device (226) and having a surface (210) positioned catercorner to said intersecting walls to which a rear wall of said device (226) is securely fastened to position said device (226) symmetrically about said bisecting plane catercorner to said intersecting walls, said adapter (207) having means (214, 215) receiving fasteners (216, 217) in one or more locations in sufficient proximity to the room corner to secure the adapter to said room corner studs (203, 204).

17. A mounting system according to claim 16, wherein said cross-section of said adapter has the shape of an isosceles trapezoid with the non-parallel opposing sides being orthogonally related, and the widest of the parallel sides being provided with means for enabling said device to be attached contiguous thereto.

18. A mounting system according to claim 17, wherein said adapter is in the form of a solid isosceles trapezoidal prism.

19. A mounting system according to claim 18, wherein said means receiving fasteners comprise at least one through bore extending between one of said orthogonally related sides and the widest of the parallel sides.

20. A mounting system according to claim 19, wherein said widest of the parallel sides has at least one threaded bore for receiving a threaded fastener for securing said device thereto.

21. A mounting system according to claim 19, wherein a plurality of said through bores are provided with some opening on one and some opening on the other of said orthogonally related sides while all open on said widest of the parallel sides.

22. A mounting system according to claim 21, wherein said widest of the parallel sides has at least one threaded bore for receiving a threaded fastener for securing said device thereto.

23. A mounting system according to claim 16,
wherein said adapter (292) comprises a strip of metal sheet stock formed into a generally right triangular configuration but with the right angled corner (293) missing such that the perimeter of the adapter has the shape of an isosceles trapezoid with the smaller parallel side missing, the widest parallel side or base (294) of the triangle has a horizontally disposed slot (295) when the adapter is placed in a vertical corner of a room, each of the non-parallel sides (296, 297) of the adapter has an aperture (298) on a level with and accessible through said slot (295) for driving a fastener therethrough into a corner wall stud, and said widest parallel side has means for enabling said device to be securely fastened contiguous thereto.

24. A mounting system according to claim 23,
wherein said device fastening means comprises a threaded aperture and means for establishing general registration between said threaded aperture and a corresponding aperture in a rear wall of said device for receiving a threaded fastener therethrough.

25. A mounting system according to claim 16,
further comprising a device with a housing having a rear portion in the shape of an isosceles trapezoidal prism with two orthogonally related side walls joined by a rear wall constructed to be fastened in engaged superposition to said adapter surface, the width of said rear wall being substantially equal to the width of said adapter surface such that said orthogonally related side walls fit snugly in said room corner when said adapter is mounted in said corner and said rear wall is fastened to said adapter surface.

## Patentansprüche

1. Eine Beleuchtungsbefestigung zur permanenten Installation in einer Ecke eines Raums zwischen zwei sich überschneidenden Wänden, umfassend in Kombination einen Verteilerkasten (13) mit hinteren Wänden, die so ausgebildet sind, daß sie satt in die Ecke passen, während der Verteilerkasten symmetrisch um die Eckmittenebene positioniert wird, eine Einrichtung, um dem Verteilerkasten zu ermöglichen, symmetrisch um die Mittenebene der sich überschneidenden Wände in der Ecke befestigt zu werden, eine Zugangseinrichtung (20) auf dem Verteilerkasten (20), um eine elektrische Verzweigungsschaltungsverdrahtung (26) einzulassen und eine derartige Verdrahtung gegen ein Abtrennen von dem Verteilerkasten zu sichern, eine Gewindefassung (25) zur Aufnahme einer Glühbirne, wobei die Fassung auf einer anderen Wand (23) des Verteilerkastens (13) angebracht ist, wobei eine Verdrahtung dadurch in den Kasten hinein für eine elektrische Verbindung mit der Verzweigungsschaltungsverdrahtung verläuft, wobei wenigstens eine Wand des Verteilerkastens (13) außer die hinteren Wände davon von dem Verteilerkasten trennbar und entfernbar sind, um einen Zugang zu dem Inneren des Verteilerkastens zu ermöglichen, wobei sämtliche entfernbaren Verteilerkastenwände mit den hinteren Wänden eines schirmartigen Lampengehäuses (10) verbunden sind, welches mit einer hinteren Öffnung (35) konstruiert und angeordnet ist, um den Verteilerkasten (13) dort aufzunehmen, wobei sämtlichen entfernbaren Verteilerkastenwände zum Zusammenbau an dem Verteilerkasten angeordnet sind, wenn das Lampengehäuse (10) über dem Verteilerkasten positioniert wird, und wobei eine Einrichtung vorgesehen ist, um die entfernbaren Verteilerkastenwände an dem Verteilerkasten (13) zum Verschließen des Verteilerkastens zu befestigen, während gleichzeitig das Lampengehäuse (10) angebracht wird.

2. Eine Beleuchtungsbefestigung nach Anspruch 1, dadurch gekennzeichnet, daß der Verteilerkasten (13) die Form eines abgeschnittenen dreieckigen Prismas aufweist.

3. Beleuchtungsbefestigung nach Anspruch 2, dadurch gekennzeichnet, daß sämtliche entfernbaren Verteilerkastenwände (24, 33) eine dreieckförmige Gestalt aufweisen.

4. Beleuchtungsbefestigung nach Anspruch 3, dadurch gekennzeichnet, daß das Lampengehäuse (10) hintere Wände (12) aufweist, die sich nach vorne erstrecken, wobei sie von einer hinteren Position unter einem Winkel von 90° auseinandergehen, bis sie in eine dekorative Frontplatte (11) übergehen.

5. Beleuchtungsbefestigung nach Anspruch 3, dadurch gekennzeichnet, daß wenigstens eine entfernbare Verteilerkastenwand die Bodenwand (33) des Verteilerkastens ist.

6. Beleuchtungsbefestigung nach Anspruch 1, dadurch gekennzeichnet, daß der Verteilerkasten umfaßt: eine erste Platte (14), die einem Flugzeug mit einem rechteckförmigen Körper (15) und Flügeln (16, 17), die sich zu jeder Seite des Körpers erstrecken, ähnelt, wobei die führenden Kanten (18, 19) der Flügel leicht nach hinten zurückgezogen sind und die gesamte Platte rechtwinklig entlang einer Linie (20), die den Körper in der Längsrichtung schneidet, umgebogen ist, und eine zweite Platte (21) mit einem rechteckförmigen Querschnitt (22), die entlang ihrer langen Kante (23) durch eine Biegelinie mit einem dreieckförmigen Abschnitt (24) verbunden ist, wobei die zweite Platte (21) mit der ersten Platte (14) verbunden ist, wobei der rechteckförmige Abschnitt mit den herausgestreckten Enden der Flügel in Verbindung steht, und wobei der dreieckförmige Abschnitt (24) eine obere Wandabdeckung für das sich ergebende abgeschnittene dreieckförmige Prisma bereitstellt.

7. Beleuchtungsbefestigung nach Anspruch 6, dadurch gekennzeichnet, daß die Gewinde fassung (25) auf dem rechteckförmigen Abschnitt (22) angebracht ist, so daß sie sich davon nach vorne erstreckt.

8. Beleuchtungsbefestigung nach Anspruch 6, dadurch gekennzeichnet, daß sich eine Anzapfung (29) von der unteren Kante des rechteckförmigen Abschnitts nach hinten erstreckt, wobei die Anzapfung mit einer Schraubengewindeöffnung (31) zur Aufnahme eines mit einem Gewinde versehenen Befestigungselements versehen ist, und wobei die Einrichtung zum Befestigen der entfernbaren Verteilerkastenwand ein mit einem Gewinde versehenes Befestigungselement umfaßt, welches so angeordnet ist, daß es durch die entfernbare Wand tritt und mit der Anzapfungsöffnung (31 in einem Gewindeeingriff steht.

9. Beleuchtungsbefestigung nach Anspruch 1, dadurch gekennzeichnet, daß der Verteilerkasten in der Form eines gleichschenkligen trapezförmigen Prismas ist.

10. Beleuchtungsbefestigung nach Anspruch 9, dadurch gekennzeichnet, daß wenigstens eine entfernbare Verteilerkastenwand im wesentlichen recheckförmig ausgebildet ist.

11. Beleuchtungsbefestigung nach Anspruch 10, dadurch gekennzeichnet, daß das Lampengehäuse hintere Wände aufweist, die sich nach vorne erstrecken, wobei sie von einem rückwärtigen Abschnitt unter einem Winkel von 90° auseinandergehen, bis sie in eine dekorative Frontplatte übergehen.

12. Beleuchtungsbefestigung nach Anspruch 10, dadurch gekennzeichnet, daß wenigstens eine entfernbaren Verteilerkastenwand die Frontwand des Verteilerkastens ist.

13. Beleuchtungsbefestigung nach Anspruch 12, dadurch gekennzeichnet, daß die Gewindefassung an wenigstens einer entfernbaren Verteilerkastenwand so angebracht ist, daß sie sich davor erstreckt.

14. Beleuchtungsbefestigung nach Anspruch 13, dadurch gekennzeichnet, daß wenigstens eine entfernbare Verteilerkastenwand einen sich nach hinten erstreckenden Flansch (121, 122) entlang von oberen und unteren Kanten, eine Öffnung durch beide Flansche, aufweist und der Verteilerkasten obere und untere Wände (104, 105) und eine Höhe aufweist, die im wesentlichen gleich zu dem Abstand zwischen den Flanschen ist, so daß die oberen und unteren Wände des Verteilerkastens, wenn diese an der wenigstens einen entfernbaren Wand angebracht werden, über den Flanschen liegen, und eine getrennte Einrichtung, die durch die jeweiligen Öffnungen in den Flanschen verläuft und jeweils in die oberen und unteren Wände eingreift, um die entfernbare Wand an dem Verteilerkasten zu befestigen.

15. Ein elektrisches Verteilerkastensystem, das in einer Ecke eines Raums zwischen zwei sich überschneidenden Wänden installiert ist, die von Raumeckpfosten (203, 204) gehalten werden, wobei der Verteilerkasten (103) aufweist: hintere Wände (106, 107, 108) mit orthogonal in einer Beziehung stehenden Abschnitten (106, 107), die ausgebildet sind, so daß sie satt in die Ecke passen, während der Verteilerkasten (103) symmetrisch um die Eckenmittenebene positioniert wird, eine Einrichtung mit Öffnungen (115) in den orthogonal in Beziehung stehenden Abschnitten (106, 107), um dem Verteilerkasten (103) zu ermöglichen, symmetrisch um die Mittenebene der sich überschneidenden Wände in der Ecke befestigt zu werden, wobei die Öffnungen über den Raumeckenabstützungen (203, 204) liegen, Befestigungselemente, die durch die Öffnungen in die Wände hinein und in die Raumeckenabstützungen (203, 204) hinein verlaufen, und eine Zugangseinrichtung (118) auf dem Verteilerkasten (103) zum Einlassen einer elektrischen Verdrahtung und zum Sichern einer derartigen Verdrahtung gegenüber einer Trennung von dem Verteilerkasten, wobei der Verteilerkasten (103) Seitenwände (104, 105, 106, 107), die in geraden Kanten enden, die eine Öffnung an dem Verteilerkasten begrenzen und in einer gemeinsamen Ebene liegen, wobei die Ebene übereck zu den sich überschneidenden Wänden des Raums angeordnet ist, und eine Einrichtung (109, 111) zur Befestigung an der Einrichtung (120) mit geraden Kanten zum Verschließen des Verteilerkastens (103), aufweist.

16. Anbringungssystem zum Anbringen einer elektrischen Verdrahtungseinrichtung (226), wobei das System in einer Ecke eines Raums zwischen zwei sich überschneidenden Wänden installiert ist, die von Raumeckenpfosten (203, 204) gehalten werden, und umfassend einen Anbringungsadapter (207) mit einem Querschnitt, der konfiguriert und dimensioniert ist, so daß er in die Raumecke zwischen der Ecke und der Einrichtung (226) paßt und mit einer Oberfläche (210), die an den sich überschneidenden Wänden, an denen eine hintere Wand der Einrichtung (226) fest befestigt ist, übereck positioniert ist, um die Einrichtung (226) symmetrisch um die Mittenebene übereck mit den sich überschneidenden Wänden zu positionieren, wobei der Adapter (207) eine Einrichtung (214, 215) aufweist, die Befestigungselemente (216, 217) in einer oder mehreren Stellen in ausreichender Nähe zu der Raumecke aufnimmt, um den Adapter an den Raumeckpfosten (203, 204) zu befestigen.

17. Anbringungssystem nach Anspruch 16, dadurch gekennzeichnet, daß der Querschnitt des Adapters die Form eines gleichschenkligen Trapezoids aufweist, wobei die nicht-parallelen gegenüberliegenden Seiten in einer orthogonalen Beziehung stehen und die breiteste der parallelen Seiten mit einer Einrichtung versehen ist, um der Einrichtung zu ermöglichen, angrenzend dazu angebracht zu werden.

18. Anbringungssystem nach Anspruch 17, dadurch gekennzeichnet, daß der Adapter in der Form eines festen gleichschenkligen trapezförmigen Prismas ist.

19. Anbringungssystem nach Anspruch 18, dadurch gekennzeichnet, daß die Einrichtung, die Befestigungselemente aufnimmt, wenigstens ein Durchloch umfaßt, das zwischen einer der orthogonal in Beziehung stehenden Seiten und der breitesten der parallelen Seiten verläuft.

20. Anbringungssystem nach Anspruch 19, dadurch gekennzeichnet, daß die breiteste der parallelen Seiten wenigstens ein Gewindeloch aufweist, um ein mit einem Gewinde versehenes Befestigungselement zum Befestigen der Einrichtung darin aufzunehmen.

21. Anbringungssystem nach Anspruch 19, dadurch gekennzeichnet, daß eine Vielzahl der Durchlöcher mit irgendeiner Öffnung auf einer und irgendeiner Öffnung auf der anderen der orthogonal in Beziehung stehenden Seiten vorgesehen sind, während sich alle auf der breitesten der parallelen Seiten öffnen.

22. Anbringungssystem nach Anspruch 21, dadurch gekennzeichnet, daß die breiteste der parallelen Seiten wenigstens ein Gewindeloch zur Aufnahme eines mit einem Gewinde versehenen Befestigungselements zum Befestigen der Einrichtung daran aufweist.

23. Anbringungssystem nach Anspruch 16, dadurch gekennzeichnet, daß der Adapter (292) einen Streifen aus einem Metallblech-Werkstoff umfaßt, der in eine allgemein rechtwinklige dreieckige Konfiguration ausgebildet ist, wobei die rechtwinklige Ecke (293) fehlt, so daß der Umfang des Adapters die Gestalt eines gleichschenkligen Trapezoids aufweist, wobei die kleinere parallele Seite fehlt, wobei die breiteste parallele Seite oder die Basis (294) des Dreiecks einen horizontal angeordneten Schlitz (295) aufweist, wenn der Adapter in einer vertikalen Ecke eines Raums angebracht wird, wobei jede der nicht parallelen Seiten (296, 297) des Adapters eine Öffnung (298) auf einem Niveau mit dem Schlitz (295) und zugänglich durch diesen zum Eintreiben eines Befestigungselements dadurch in eine Eckwandpfosten aufweist, und wobei die breiteste parallele Seite eine Einrichtung aufweist, um der Einrichtung zu ermöglichen, sicher angrenzend dazu befestigt zu werden.

24. Anbringungssystem nach Anspruch 23, dadurch gekennzeichnet, daß die Einrichtungs-Befestigungseinrichtung umfaßt: eine Gewindeöffnung und eine Einrichtung zum Herstellen einer allgemeinen Anlage zwischen der Gewindeöffnung und einer entsprechenden Öffnung in einer Rückwand der Einrichtung zur Aufnahme eines mit einem Gewinde versehenen Befestigungselements dadurch.

25. Anbringungssystem nach Anspruch 16, ferner umfassend eine Einrichtung mit einem Gehäuse umfassend einen hinteren Abschnitt in der Form eines gleichschenkligen trapezförmigen Prismas mit zwei orthogonal in Beziehung stehenden Seitenwänden, die durch eine Rückwand verbunden sind, die konstruiert ist, um an der Adapteroberfläche in einer anliegenden Überlagerung befestigt zu werden, wobei die Breite der hinteren Wand im wesentlichen gleich zu der Breite der Adapteroberfläche ist, so daß die orthogonal in Beziehung stehenden Seitenwände satt in die Raumecke passen, wenn der Adapter in der Ecke angebracht wird und die hintere Wand an der Adapteroberfläche befestigt wird.

## Revendications

1. Appareil d'éclairage pour une installation permanente dans un coin d'une pièce entre deux murs qui se coupent comportant en combinaison une boite de jonction (13) avec des parois arrière conformées de façon à s'adapter parfaitement dans ledit coin tout en positionnant la boite de jonction de manière symétrique par rapport au plan bissecteur du coin, des moyens destinés à permettre à ladite boite de jonction d'être fixée de manière symétrique par rapport au plan bissecteur du coin sur lesdits murs qui se croisent dans ledit coin, des moyens d'entrée (20) sur ladite boite de jonction afin d'admettre un câblage de circuit de branchement électrique (26) et fixer ce câblage à l'encontre d'une séparation de ladite boîte de jonction, une douille à vis (25) destinée à recevoir une ampoule électrique, ladite douille étant montée sur une autre paroi (23) de ladite boite de jonction (13) avec un câblage passant à travers dans ladite boite pour un raccordement électrique au dit câblage de circuit de branchement, au moins une paroi de ladite boîte de jonction (13) autre que lesdites parois arrière étant séparable et amovible de ladite boite de jonction afin de permettre l'accès à l'intérieur de ladite boite de jonction, toutes lesdites parois de boite de jonction amovibles étant reliées aux parois arrière d'un corps de lampe en forme d'abat-jour (10) construit et agencé avec une ouverture arrière (35) afin de recevoir ladite boite de jonction (13), toutes lesdites parois de boîte de jonction amovibles étant placées pour assemblage sur ladite boîte de jonction lorsque ledit corps de lampe (10) est positionné au-dessus de ladite boîte de jonction, et des moyens prévus pour la fixation desdites parois de boite de jonction amovibles sur ladite boite de jonction (13) afin de fermer ladite boite de jonction tout en montant simultanément ledit corps de lampe (10).

2. Appareil d'éclairage selon la revendication 1, dans lequel ladite boîte de jonction (13) est sous la forme d'un prisme triangulaire tronqué.

3. Appareil d'éclairage selon la revendication 2, dans lequel toutes lesdites parois de boite de jonction amovibles (24, 33) sont de forme triangulaire.

4. Appareil d'éclairage selon la revendication 3, dans lequel ledit corps de lampe (10) possède des parois arrière (12) qui s'étendent vers l'avant de façon divergente depuis une position arrière avec un angle de 90° jusqu'à ce qu'elles se raccordent dans un panneau avant décoratif (11).

5. Appareil d'éclairage selon la revendication 3, dans lequel ladite paroi de boîte de jonction amovible est la paroi inférieure (33) de la boite de jonction.

6. Appareil d'éclairage selon la revendication 1, dans lequel ladite boîte de jonction comporte un premier panneau (14) ressemblant à un avion avec un corps rectangulaire (15) et des ailes (16, 17) qui s'étendent de chaque côté du corps, les bords avant (18, 19) des ailes étant légèrement en flèche vers l'arrière et le panneau entier étant replié à angle droit le long d'une ligne (20) qui coupe en deux le corps dans la direction longitudinale, et un deuxième panneau (21) ayant une section rectangulaire (22) reliée le long de son bord long (23) par une ligne de pliage à une section triangulaire (24), ledit deuxième panneau (21) étant relié au dit premier panneau (14) avec ladite section rectangulaire reliant les extrémités étendues desdites ailes, et ladite section triangulaire (24) procurant une fermeture de paroi supérieure pour le prisme triangulaire tronqué résultant.

7. Appareil d'éclairage selon la revendication 6, dans lequel ladite douille à vis (25) est montée sur ladite section rectangulaire (22) afin de s'étendre en avant de celle-ci.

8. Appareil d'éclairage selon la revendication 6, dans lequel une patte (29) s'étend vers l'arrière depuis le bord inférieur de ladite section rectangulaire, ladite patte étant pourvue d'une ouverture filetée (31) destinée à recevoir un élément de fixation fileté, et lesdits moyens de fixation de ladite paroi de boite de fonction amovible comportent un élément de fixation fileté prévu pour passer à travers ladite paroi amovible et engager de manière vissée ladite ouverture de patte (31).

9. Appareil d'éclairage selon la revendication 1, dans lequel ladite boite de jonction est sous la forme d'un prisme trapézoïdal isocèle.

10. Appareil d'éclairage selon la revendication 9, dans lequel ladite paroi de boite de jonction amovible est de forme sensiblement rectangulaire.

11. Appareil d'éclairage selon la revendication 10, dans lequel ledit corps de lampe possède des parois arrière qui s'étendent vers l'avant de manière divergente depuis une position arrière avec un angle de 90° jusqu'à ce qu'elles se raccordent dans un panneau avant décoratif.

12. Appareil d'éclairage selon la revendication 10, dans lequel ladite paroi de boite de jonction amovible est la paroi avant de la boîte de jonction.

13. Appareil d'éclairage selon la revendication 12, dans lequel ladite douille à vis est montée sur ladite paroi de boîte de jonction amovible afin de s'étendre en avant de celle-ci.

14. Appareil d'éclairage selon la revendication 13, dans lequel ladite paroi de boite de jonction amovible possède un rebord s'étendant vers l'arrière (121, 122) le long des bords supérieur et inférieur, une ouverture à travers les deux dits rebords, et ladite boîte de jonction possède des parois supérieure et inférieure (104, 105) et une hauteur sensiblement égale à la distance entre lesdits rebords de telle sorte que lesdites parois supérieure et inférieure de ladite boite de jonction, lorsqu'elles sont assemblées sur ladite paroi amovible, recouvrent lesdits rebords, et des moyens séparés destinés à passer à travers lesdites ouvertures respectives dans lesdits rebords et engageant, respectivement, lesdites parois supérieure et inférieure afin de fixer ladite paroi amovible sur ladite boite de jonction.

15. Système de boîte de jonction électrique installé dans un coin d'une pièce entre deux murs qui se coupent supportés par des montants de coin de pièce (203, 204), ladite boite de jonction (103) ayant des parois arrière (106, 107, 108) comprenant des parties liées de manière orthogonale (106, 107) conformées de façon à s'adapter parfaitement dans ledit coin tout en positionnant la boite de jonction (103) de manière symétrique autour du plan bissecteur de coin, des moyens comprenant des ouvertures (115) dans lesdites parties liées de manière orthogonale (106, 107) afin de permettre à ladite boite de jonction (103) d'être fixée de manière symétrique autour dudit plan bissecteur sur lesdits murs qui se coupent dans ledit coin avec lesdites ouvertures recouvrant les montants de coin de pièce (203, 204), des éléments de fixation passant à travers lesdites ouvertures dans lesdites parois et dans lesdits montants de coin de pièce (203, 204), et des moyens d'entrée (118) sur ladite boite de jonction (103) afin d'admettre un câblage électrique et fixer ce câblage à l'encontre d'une séparation de ladite boîte de jonction, ladite boite de jonction (103) ayant des parois latérales (104, 105, 106, 107) qui se terminent par des bords droits délimitant une ouverture dans la boite de jonction et s'étendant dans un plan commun, lequel plan se trouve dans le coin desdits murs qui se coupent de la pièce et des moyens (109, 111) de fixation sur lesdits moyens de bord droit (120) afin de fermer ladite boite de jonction (103).

16. Système de montage pour le montage d'un dispositif de câblage électrique (226), le système étant installé dans un coin d'une pièce entre deux murs qui se coupent supportés par des montants de coin de pièce (203, 204) et comportant un adaptateur de montage (207) ayant une section configurée et dimensionnée de façon à s'adapter dans ledit coin de pièce entre ledit coin et ledit dispositif (226) et ayant une surface (210) positionnée dans le coin desdits murs qui se coupent sur laquelle une paroi arrière dudit dispositif (226) est fixée de façon sûre afin de positionner ledit dispositif (226) de manière symétrique autour dudit plan bissecteur desdits murs qui se coupent, ledit adaptateur (207) ayant des moyens (214, 215) recevant des éléments de fixation (216, 217) dans un ou plusieurs emplacements à proximité suffisante du coin de pièce pour fixer l'adaptateur sur lesdits montants de coin de pièce (203, 204).

17. Système de montage selon la revendication 16, dans lequel ladite section dudit adaptateur a la forme d'un trapèze isocèle avec les côtés opposés non parallèles qui sont liés orthogonalement, et le plus large des côtés parallèles qui est pourvu de moyens destinés à permettre au dit dispositif d'être fixé dessus de façon contiguë.

18. Système de montage selon la revendication 17, dans lequel ledit adaptateur est sous la forme d'un prisme trapézoïdal isocèle plein.

19. Système de montage selon la revendication 18, dans lequel lesdits moyens recevant des éléments de fixation comportent au moins un alésage débouchant s'étendant entre l'un desdits côtés liés orthogonalement et le plus large des côtés parallèles.

20. Système de montage selon la revendication 19, dans lequel ledit plus large desdits côtés parallèles possède au moins un alésage fileté destiné à recevoir un élément de fixation fileté afin de fixer dessus ledit dispositif.

21. Système de montage selon la revendication 19, dans lequel plusieurs desdits trous débouchants sont pourvus d'une forme d'ouverture sur l'un et d'une forme d'ouverture sur l'autre desdits côtés liés orthogonalement alors qu'ils sont tous ouverts sur ledit plus large des côtés parallèles.

22. Système de montage selon la revendication 21, dans lequel ledit plus large des côtés parallèles possède au moins un alésage fileté destiné à recevoir un élément de fixation fileté pour fixation dudit dispositif dessus.

23. Système de montage selon la revendication 16, dans lequel ledit adaptateur (292) comporte une bande de tôle formée avec une configuration triangulaire droite mais avec le coin à angle droit (293) qui manque de sorte que le périmètre de l'adaptateur a la forme d'un trapèze isocèle avec le plus petit côté parallèle qui manque, le côté parallèle plus large ou base (294) du triangle possède une fente disposée horizontalement (295) lorsque l'adaptateur est placé dans un coin vertical d'une pièce, chacun des côtés non parallèles (296, 297) de l'adaptateur possède une ouverture (298) de niveau avec et accessible à travers ladite fente (295) afin de faire passer un élément de fixation dans un montant de coin, et ledit côté parallèle plus large possède des moyens destinés à permettre au dit dispositif d'être fixé de façon contiguë dessus.

24. Système de montage selon la revendication 23, dans lequel lesdits moyens de fixation de dispositif comportent une ouverture filetée et des moyens destinés à établir un alignement général entre ladite ouverture filetée et une ouverture correspondante dans une paroi arrière dudit dispositif destinée à recevoir un élément de fixation fileté à travers.

25. Système de montage selon la revendication 16, comportant en outre un dispositif avec un boîtier ayant une partie arrière sous la forme d'un prisme trapézoïdal isocèle avec deux parois latérales liées orthogonalement reliées par une paroi arrière construite afin d'être fixée en superposition engagée avec ladite surface d'adaptateur, la largeur de ladite paroi arrière étant sensiblement égale à la largeur de ladite surface d'adaptateur de telle sorte que lesdites parois latérales liées orthogonalement s'ajustent parfaitement dans ledit coin de pièce lorsque ledit adaptateur est monté dans ledit coin et ladite paroi arrière est fixée sur ladite surface d'adaptateur.
